# EUROPEAN PATENT APPLICATION

(11) **EP 4 380 241 A1**
(43) Date of publication of application: **05.06.2024**
(21) Application number: 21951343.9
(22) Date of filing: 30.07.2021
(51) Int. Cl.: H04W 52/02

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); CUI, Shengjiang, Dongguan, Guangdong 523860 (CN); SHAO, Shuai, Dongguan, Guangdong 523860 (CN); XU, Weijie, Dongguan, Guangdong 523860 (CN); ZHANG, Zhi, Dongguan, Guangdong 523860 (CN)
(74) Representative: Novagraaf Technologies
(86) International application number: PCT/CN2021/109594
(87) International publication number: WO 2023/004747

(57) **Abstract**

Embodiments of the present application provide a wireless communication method, a terminal device, and a network device. The method comprises: sending first indication information, wherein the first indication information is used to indicate first parameters, and the first parameters are used to represent a first energy collection efficiency and/or first time interval of a terminal device. By means of the indicated first parameters, the network device may be enabled to know the energy collection efficiency or time interval of the terminal device. Thus, when the network device performs downlink transmission or uplink scheduling, communication parameters may be determined according to the energy collection efficiency or time interval indicated by a zero-power device, which reduces invalid transmission or scheduling, conserves transmission resources, reduces delay, and improves the system performance of zero-power communication.

## Description

### TECHNICAL FIELD

Embodiments of the present disclosure relate to the field of communications and more particularly to a method for wireless communication, a terminal device and a network device.

### BACKGROUND

In zero-power communication, when a zero-power terminal is far away from a network station, the speed of obtaining and storing power through power harvesting is very slow, and the stored power can only be used for the zero-power device to perform communication within a certain period of time. When the stored power is exhausted, the communication between the zero-power device and the network device will be interrupted.

Therefore, for zero-power devices at edges, how to reduce the impact of interruption is an urgent technical problem to be solved in this field.

### SUMMARY

The embodiments of the present disclosure provide a method for wireless communication, a terminal device and a network device, which can be used to reduce the invalid transmission or scheduling, save transmission resources, reduce time delay and improve system performance of zero-power communication.

In a first aspect, the present disclosure provides a method for wireless communication, which includes following operations.

First indication information is sent.

The first indication information indicates a first parameter, and the first parameter is used to represent at least one of first power harvesting efficiency of a terminal device or a first time interval.

In a second aspect, the present disclosure provides a method for wireless communication, which includes following operations.

A first parameter is determined. The first parameter is used to represent at least one of first power harvesting efficiency of a terminal device or a first time interval.

Data transmission is performed with the terminal device based on the first parameter.

In a third aspect, the present disclosure provides a terminal device for performing the method in the first aspect or various implementations thereof. In particular, the terminal device includes functional modules for performing the method in the first aspect or various implementations thereof.

In one implementation, the terminal device may include a processing unit configured to perform functions related to information processing. For example, the processing unit may be a processor.

In one implementation, the terminal device may include at least one of a sending unit or a receiving unit. The sending unit is configured to perform functions related to sending, and the receiving unit is configured to perform functions related to receiving. For example, the sending unit may be a transmitter or an emitter and the receiving unit may be a receiver or a receptor. For another example, the terminal device is a communication chip, the sending unit can be an input circuit or an interface of the communication chip, and the sending unit can be an output circuit or an interface of the communication chip.

In a fourth aspect, the present disclosure provides a network device for performing the method in the second aspect or various implementations thereof. In particular, the network device includes functional modules for performing the method in the second aspect or various implementations thereof.

In one implementation, the network device may include a processing unit configured to perform functions related to information processing. For example, the processing unit may be a processor.

In one implementation, the network device may include at least one of a sending unit or a receiving unit. The sending unit is configured to perform functions related to sending, and the receiving unit is configured to perform functions related to receiving. For example, the sending unit may be a transmitter or an emitter and the receiving unit may be a receiver or a receptor. For another example, the network device is a communication chip, the receiving unit can be an input circuit or an interface of the communication chip, and the sending unit can be an output circuit or an interface of the communication chip.

In a fifth aspect, the present disclosure provides a terminal device including a processor and a memory. The memory is used for storing a computer program, and the processor is configured to invoke and run the computer program stored in the memory to perform the method in the first aspect or various implementations thereof.

In one implementation, the number of the processor may be one or more and the number of the memory may be one or more.

In one implementation, the memory may be integrated with the processor, or the memory may be disposed separately from the processor.

In one implementation, the terminal device further includes a transmitter (emitter) and a receiver (receptor).

In a sixth aspect, the present disclosure provides a network device including a processor and a memory. The memory is used for storing a computer program, and the processor is configured to invoke and run the computer program stored in the memory to perform the method in the second aspect or various implementations thereof.

In one implementation, the number of the processor may be one or more and the number of the memory may be one or more.

In one implementation, the memory may be integrated with the processor, or the memory may be disposed separately from the processor.

In one implementation, the network device further includes a transmitter (emitter) and a receiver (receptor).

In a seventh aspect, the present disclosure provides a chip for implementing a method in any of the first to second aspects or various implementations thereof. In particular, the chip includes a processor configured to invoke and run a computer program from a memory to cause a device installed with the chip to perform the method as in any of the first to second aspects or various implementations thereof.

In an eighth aspect, the present disclosure provides a computer-readable storage medium for storing a computer program that causes a computer to perform the method in any of the first to second aspects or various implementations thereof.

In a ninth aspect, the present disclosure provides a computer program product including computer program instructions that cause a computer to perform the method in any of the first to second aspects or various implementations thereof.

In a tenth aspect, the present disclosure provides a computer program that, when run on a computer, causes a computer to perform the method in any of the first to second aspects or various implementations thereof.

Based on the above technical solutions, by the indicated first parameter, the network device can know power harvesting efficiency of the terminal device or a time interval, and further, when the network device performs a downlink transmission or uplink scheduling, communication parameters can be determined according to the power harvesting efficiency or the time interval indicated by a zero-power device, thereby reducing the invalid transmission or scheduling, saving transmission resources, reducing time delay and improving the system performance of zero-power communication.

### BRIEF DESCRIPTION OF THE DRAWINGS

FIG. 1 is a schematic diagram of a communication system according to an embodiment of the present disclosure.
FIG. 2 is a schematic diagram of a zero-power communication system according to the present disclosure.
FIG. 3 is a schematic diagram of power harvesting according to an embodiment of the present disclosure.
FIG. 4 is a schematic diagram of back scattering communication according to the present disclosure.
FIG. 5 is a circuit schematic diagram of resistance load modulation according to an embodiment of the present disclosure.
FIG. 6 is a schematic flowchart of a method for wireless communication according to an embodiment of the present disclosure.
FIG. 7 is another schematic flowchart of a method for wireless communication according to an embodiment of the present disclosure.
FIG. 8 is a schematic block diagram of a terminal device according to an embodiment of the present disclosure.
FIG. 9 is a schematic block diagram of a network device according to an embodiment of the present disclosure.
FIG. 10 is a schematic block diagram of a communication device according to an embodiment of the present disclosure.
FIG. 11 is a schematic block diagram of a chip according to an embodiment of the present disclosure.

### DETAILED DESCRIPTION

The technical solutions of the embodiments of the present disclosure will be described below in conjunction with the drawings in the embodiments of the present disclosure, and it will be obvious that the described embodiments are part of the embodiments of the present disclosure, but not all of the embodiments of the present disclosure. With respect to the embodiments in the present disclosure, all other embodiments obtained by those of ordinary skill in the art without making creative efforts fall within the scope of protection of the present disclosure.

It should be understood that the terms "system" and "network" herein are often used interchangeably. The term "and/or" herein is only an association relationship describing associated objects, which means that there may be three relationships. For example, "A and/or B" may have three meanings: A exists alone, A and B exist at the same time and B exists alone. In addition, the character "j" herein generally indicates that the associated objects before and after the character "/" are in an "or" relationship.

In the description of the embodiments of the present disclosure, the term "correspondence" may mean that there is a direct correspondence or an indirect correspondence relationship between the two, may also mean that there is an association relationship between the two, may also be a relationship between indication and being indicated, configuration and being configured, etc.

The embodiments of the present disclosure can be applied to various communication systems, such as: Global System of Mobile communication (GSM) systems, Code Division Multiple Access (CDMA) systems, Wideband Code Division Multiple Access (WCDMA) systems, General Packet Radio Service (GPRS), Long Term Evolution (LTE) systems, Advanced long term evolution (LTE) systems, New Radio (NR) systems, evolution systems of NR systems, and LTE-based access to unlicensed spectrum (LTE-U) systems, NR-based access to unlicensed spectrum (NR-U) systems, Universal Mobile Telecommunication Systems (UMTS), Wireless Local Area Networks (WLAN), Wireless Fidelity (WiFi), next generation communication systems, zero-power communication systems, cellular Internet of Things (IoT), cellular passive Internet of Things or other communication systems.

The cellular Internet of Things is the development product of the combination of cellular mobile communication network and Internet of Things. The cellular passive Internet of Things is also called passive cellular Internet of Things, which is a combination of a network device and passive terminals. In the cellular passive Internet of Things, a passive terminal can communicate with other passive terminals through the network device, or the passive terminals can communicate in a Device to Device (D2D) communication mode, while the network device only needs to send carrier signals, that is, power supply signals, to supply power to the passive terminals.

In general, conventional communication systems support a limited number of connections and are easy to implement. However, with the development of communication technologies, mobile communication systems will not only support conventional communication, but also support, for example, D2D communication, Machine to Machine (M2M) communication, Machine Type Communication (MTC), Vehicle to Vehicle (V2V) communication, etc. The embodiments of the present disclosure can also be applied to these communication systems.

In an embodiment, the communication system in the embodiments of the present disclosure can be applied to a Carrier Aggregation (CA) scenario, a Dual Connectivity (DC) scenario, and a Standalone (SA) network distribution scenario.

The applied spectrum is not limited by the embodiments of the present disclosure. For example, the embodiments of the present disclosure may be applied to a licensed spectrum or an unlicensed spectrum.

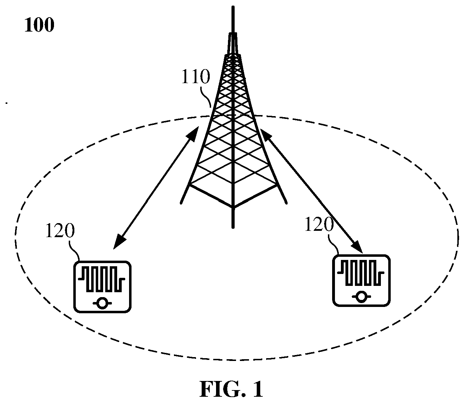

Exemplarily, a communication system 100 applied in the embodiments of the present disclosure is illustrated in FIG. 1. The communication system 100 may include a network device 110, which may be a device that communicates with a terminal device 120 (or referred to as a communication terminal or terminal). The network device 110 may provide communication coverage for a particular geographic area and may communicate with terminal devices located within the coverage area.

FIG. 1 exemplarily illustrates one network device and two terminal devices. In an embodiment, the communication system 100 may include multiple network devices and other numbers of terminal devices may be included within the coverage area of each network device, which is not limited by the embodiments of the present disclosure.

In an embodiment, the communication system 100 may further include other network entities, such as network controller, a mobility management entity and the like, which are not limited by the embodiments of the present disclosure.

It should be understood that a device having a communication function in a network/system in the embodiments of the present disclosure may be referred to as a communication device. Taking the communication system 100 illustrated in FIG. 1 as an example, the communication device may include a network device 110 and terminal devices 120 that have a communication function, and the network device 110 and the terminal device 120 may be specific devices described above and will not be described here. The communication device may further include other devices in the communication system 100, such as a network controller, a mobility management entity and other network entities, which are not limited in the embodiments of the present disclosure.

The embodiments of the present disclosure describe various embodiments in connection with the terminal device and the network device. The network device may be a device for communicating with a mobile device, the network device may be an Access Point (AP) in a WLAN, a Base Transceiver Station (BTS) in a GSM or in a CDMA, a base station (NodeB, NB) in a WCDMA system, an Evolutional Node B (eNB or eNodeB) in a LTE, or a relay station or an Access Point, or a network device (gNB) in a vehicle-mounted device, a wearable device and an NR network or a network device in a future evolved Public Land Mobile Network (PLMN), etc.

In the embodiment of the present disclosure, the network device provides services for a cell, and the terminal device communicates with the network device through transmission resources (e.g., frequency domain resources, or spectrum resources) used by the cell. The cell may be a cell corresponding to the network device (e.g., base station), and the cell may belong to a macro base station or a base station corresponding to a Small cell. The Small cell may include a Metro cell, a Micro cell, a Pico cell, a Femto cell, etc. These Small cells have the characteristics of small coverage and low transmission power, and are suitable for providing high-speed data transmission services.

In the embodiments of the present disclosure, a terminal device may also be referred to as a User Equipment, an access terminal, a subscriber unit, a subscriber station, a mobile station, a mobile platform, a remote terminal, a mobile device, a user terminal, a terminal, a wireless communication device, a user agent or a user apparatus, etc. The terminal device may be a STAION (ST) in a WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing devices connected to a wireless modem, a vehicle-mounted device, a wearable device, and a next generation communication system, such as a terminal device in an NR network or a terminal device in a future evolved PLMN, or a zero-power device.

By way of example but not limitation, in the embodiments of the present disclosure, the terminal device may also be a wearable device. The wearable device can also be called a wearable intelligent device, which is a general name of wearable devices (such as glasses, gloves, watches, clothing and shoes) developed by intelligently designing daily wear by applying wearable technologies. The wearable device is a portable device that is worn directly on the body or integrated into the user's clothes or accessories. The wearable device is not only a kind of hardware device, but also realizes powerful functions through software support, data interaction and cloud interaction. The generalized wearable smart device includes devices that have full functions and a large size, which can realize complete or partial functions without relying on smart phones, such as smart watches or smart glasses. In addition, the generalized wearable smart device further includes devices that only focus on a certain kind of application function, which need to be used in conjunction with other devices, such as smart phones, such as various smart bracelets and smart jewelry for monitoring physical signs.

It should be understood that a zero-power device can be understood as a device whose power consumption is lower than preset power consumption. For example, the zero-power device includes the passive terminal and even includes the semi-passive terminal.

Exemplarily, the zero-power device is a Radio Frequency Identification (RFID) tag, which is a technology for realizing contactless automatic transmission and identification of tag information by means of spatial coupling of radio frequency signals. The RFID tag is also called "radio frequency tag" or "electronic tag". According to different power supply modes, the type of the electronic tag can be divided into the active electronic tag, the passive electronic tag and the semi-passive electronic tag. The active electronic tag, also known as the initiative electronic tag, means that the working power of the electronic tag is provided by battery, and the battery, memory and antenna together form the active electronic tag. Different from the passive radio frequency activation mode, the active electronic tag sends information through set frequency band before battery replacement. The passive electronic tag, also known as the inactive electronic tag, does not support a built-in battery. When the passive electronic tag approaches a reader, the tag is in the near field range formed by the radiation of an antenna of the reader. An antenna of the electronic tag generates an induced current through electromagnetic induction, and the induced current drives a chip circuit of the electronic tag. The chip circuit sends the identification information stored in the tag to the reader through the antenna of the electronic tag. The semi-passive electronic tag, also known as the semi-initiative electronic tag, inherits the advantages of small size, light weight, low price and long service life of the passive electronic tag. The built-in battery of the semi-passive electronic tag only provides power for a few circuits in the chip when there is no reader access, and only when the reader accesses, the built-in battery supplies power to the RFID chip, so as to increase the reading and writing distance of the tag and improve the reliability of communication.

An RFID system is a wireless communication system. The RFID system is composed of two parts: an electronic Tag and a Reader/Writer. The electronic tag includes coupling components and chips. Every electronic tag has a unique electronic code, which is placed on the measured target to mark the target object. The reader/writer cannot only read the information on the electronic tag, but also write the information on the electronic tag, and at the same time provide the power needed for communication for the electronic tag.

Zero-power communication adopts technologies of power harvesting and back scattering communication. In order to understand the technical solutions of the embodiments of the present disclosure, the related technology of the zero-power is explained.

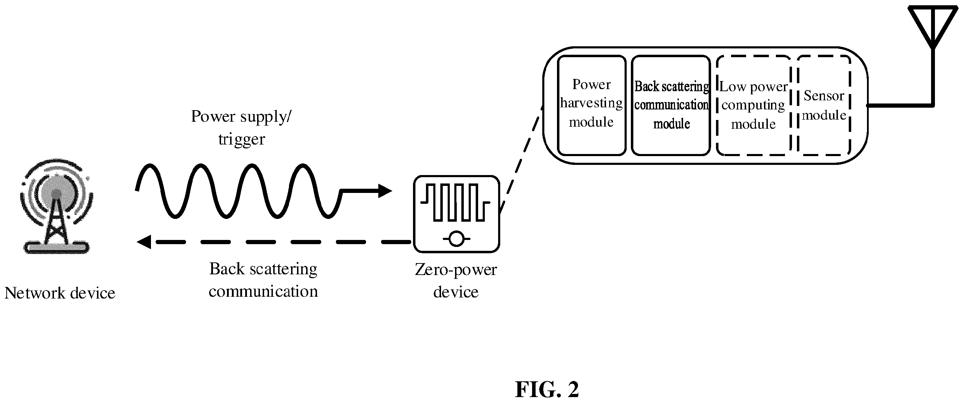

FIG. 2 is a schematic diagram of a zero-power communication system provided by the present disclosure.

As illustrated in FIG. 2, the zero-power communication system consists of a network device and a zero-power terminal. The network device is used to send wireless power supply signals and downlink communication signals to the zero-power terminal and receive back scattering signals from the zero-power terminal. A basic zero-power terminal includes a power harvesting module, a back scattering communication module and a low power computing module. In addition, the zero-power terminal can further have a memory or a sensor for storing some basic information (such as, article identification, etc.) or obtaining sensing data, such as ambient temperature and ambient humidity.

The zero-power communication can also be called zero-power terminal-based communication. The key technologies of the zero-power communication mainly include Radio Frequency (RF) power harvesting and back scattering communication.

### 1. RF Power Harvesting.

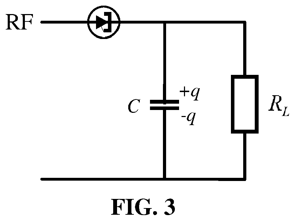

FIG. 3 is a schematic diagram of power harvesting provided by an embodiment of the present disclosure.

As illustrated in FIG. 3, the RF power harvesting module harvests space electromagnetic wave power based on the principle of electromagnetic induction, and then obtains the power needed to drive the zero-power terminal, such as driving the low power demodulation and modulation module, sensors and memory reading. Therefore, the zero-power terminal does not need a conventional battery.

### 2. Back Scattering Communication.

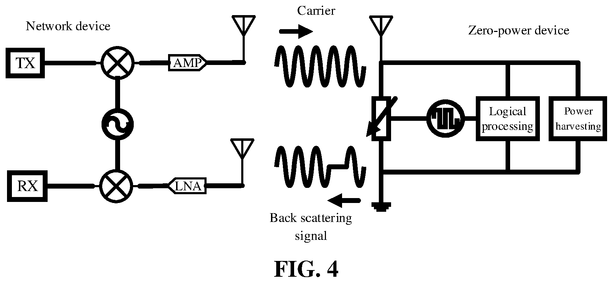

FIG. 4 is a schematic diagram of back scattering communication provided by the present disclosure.

As illustrated in FIG. 4, the zero-power communication terminal receives the wireless signals sent by the network, modulates the wireless signals, loads the information to be sent and radiates the modulated signals from the antenna. This information transmission process is called back scattering communication.

It should be noted that the principle of the back scattering communication illustrated in FIG. 4 is explained by a zero-power device and a network device, and virtually any device having a function of back scattering communication can realize back scattering communication.

The back scattering communication and load modulation are inseparable. The load modulation adjusts and controls the circuit parameters of the oscillation loop of the zero-power terminal according to the beat of the data stream, so that the size and the phase of impedance of the zero-power device are changed accordingly, and thus the modulation process is completed. The technology of the load modulation mainly includes resistance load modulation and capacitance load modulation.

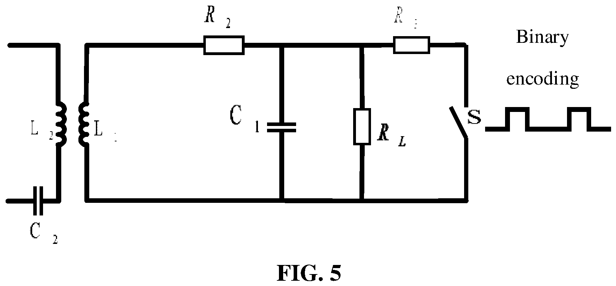

FIG. 5 is a circuit schematic diagram of resistance load modulation provided by an embodiment of the present disclosure.

As illustrated in FIG. 5, in the resistance load modulation, a resistor is connected in parallel with the load, which is called load modulation resistor. The resistor is switched on or switched off based on the control of binary data stream. The switching on and off of the resistor will lead to the change of circuit voltage, so that Amplitude Shift Keying (ASK) modulation is realized. That is, signal modulation and transmission are realized by adjusting the amplitude of the back scattering signal of the zero-power terminal. Similarly, in the capacitance load modulation, the resonant frequency of the circuit can be changed by switching the capacitor on and off, so that Frequency Shift Keying (FSK) modulation is realized. That is, the signal modulation and transmission are realized by adjusting the working frequency of the back scattering signal of the zero-power terminal.

Because the zero-power terminal modulates incoming signals by means of load modulation, the back scattering communication process is realized. Therefore, the zero-power terminal has following significant advantages.
1. The terminal device does not actively emit signals, and realizes back scattering communication by modulating incoming signals.
2. The terminal device does not rely on the traditional active power amplifier transmitter, and uses a low power computing unit to greatly reduce the complexity of hardware.
3. Battery-free communication can be realized by combining power harvesting.

It should be understood that the terminal device may be a zero-power device (such as a passive terminal, or even a semi-passive terminal), or even the terminal device may be a non-zero-power device, such as an ordinary terminal, but the ordinary terminal may perform back scattering communication in some cases.

In the specific implementation, the data transmitted by the terminal device can use different forms of codes to represent binary "1" and "0". Radio frequency identification systems generally use one of the following coding methods: reverse non-return-to-zero (NRZ) coding, Manchester coding, Unipolar RZ coding, differential biphase (DBP) coding, Miller coding and differential coding. Generally speaking, 0 and 1 are represented by different pulse signals.

By way of example, the zero-power terminal may be divided into the following types based on the power source and usage mode of the zero-power terminal.

### 1. Passive zero-power terminal.

The zero-power terminal does not need a built-in battery. When the zero-power terminal approaches the network device (such as the reader of the RFID system), the zero-power terminal is in the near-field range formed by the radiation of the antenna of the network device. Therefore, an antenna of the zero-power terminal generates an induced current through electromagnetic induction, and the induced current drives the low power chip circuit of the zero-power terminal. Demodulation of the forward link signal and modulation of the backward link signal are realized. For the back scattering link, the zero-power terminal uses the back scattering implementation for signal transmission.

It can be seen that the passive zero-power terminal does not need the built-in battery to drive either the forward link or the backward link, so it is a true zero-power terminal. The passive zero-power terminal does not need the battery, and the RF circuit and the baseband circuit of the passive zero-power terminal are very simple. For example, a Low Noise Amplifier (LNA), a Power Amplifier (PA), a crystal oscillator, an Analog to Digital Converter (ADC) and the like are not required by the passive zero-power terminal, and thus the passive zero-power terminal has many advantages, such as small size, light weight, very cheap price and long service life.

### 2. Semi-passive zero-power terminal.

The semi-passive zero-power terminal itself is not installed with conventional batteries, but an RF power harvesting module can be used to harvest radio wave power and store the harvested power in a power storage unit (such as, capacitor). After the power storage unit obtains power, the low power chip circuit of the zero-power terminal can be driven. Demodulation of the forward link signal and modulation of the backward link signal are realized. For the back scattering link, the zero-power terminal uses the back scattering implementation for signal transmission.

It can be seen that the semi-passive zero-power terminal does not need the built-in battery to drive either the forward link or the backward link. Although the power stored by capacitors is used in the work, the power comes from the radio power harvested by the power harvesting module, so it is also a true zero-power terminal. The semi-passive zero-power terminal inherits many advantages of the passive zero-power terminal, so it has many advantages such as small size, light weight, very cheap price and long service life.

### 3. Active zero-power terminal.

In some scenarios, the zero-power terminal used can also be an active zero-power terminal, which can have the built-in battery. The battery is used to drive a low power chip circuit of the zero-power terminal. Demodulation of the forward link signal and modulation of the backward link signal are realized. However, for the back scattering link, the zero-power terminal uses the back scattering implementation for signal transmission. Therefore, the zero-power of this kind of terminal is mainly reflected in the fact that the signal transmission on the backward link does not need the power of the terminal itself, but uses the way of back scattering. That is to say, the active zero-power terminal supplies power to the RFID chip through the built-in battery, so as to increase the reading and writing distance of the zero-power terminal and improve the reliability of communication. Therefore, the active zero-power terminal can be applied in some scenarios with relatively high requirements on communication distance and reading delay.

Exemplarily, the zero-power terminal may perform power harvesting based on the power supply signal.

In an embodiment, from the perspective of the carrier of the power supply signal, the power supply signal can be a base station, a smart phone, an intelligent gateway, a charging station, a micro base station, etc.

In an embodiment, from the perspective of the frequency band, the power supply signal can be a low frequency signal, an intermediate frequency signal, a high frequency signal, etc.

In an embodiment, from the perspective of the waveform, the power supply signal may be a sine wave, a square wave, a triangular wave, a pulse, a rectangular wave, etc.

In an embodiment, the power supply signal may be a continuous wave or a non-continuous wave (i.e., a certain time interruption is allowed).

In an embodiment, the power supply signal can be a certain signal specified in the 3GPP standard. For example, the power supply signal can be a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), etc.

It should be noted that since the above carrier signal sent by the network device can also be used to provide power to the zero-power device, the carrier signal can also be called power supply signal.

Exemplarily, the zero-power terminal may perform back scattering communication based on the received trigger signal. In an embodiment, the trigger signal may be used to schedule or trigger the zero-power terminal to perform the back scattering communication. In an embodiment, the trigger signal carries the scheduling information of the network device, or the trigger signal is scheduling signaling or a scheduling signal sent by the network device.

In an embodiment, from the perspective of the carrier of the power supply signal, the trigger signal can be a base station, a smart phone, an intelligent gateway, etc.

In an embodiment, from the perspective of the frequency band, the trigger signal can be a low frequency signal, an intermediate frequency signal, a high frequency signal, etc.

In an embodiment, from the perspective of the waveform, the trigger signal may be a sine wave, a square wave, a triangular wave, a pulse, a rectangular wave, etc.

In an embodiment, the trigger signal may be a continuous wave or a non-continuous wave (i.e., a certain time interruption is allowed).

In an embodiment, the trigger signal may be a signal specified in the 3GPP standard. Such as, an SRS, a PUSCH, a PRACH, a PUCCH, a PDCCH, a PDSCH, a PBCH and so on. The trigger signal may also be a new signal.

It should be noted that the power supply signal and the trigger signal can be one signal or two independent signals, which are not specifically limited in the present disclosure.

With the increasing application demand in the 5G industry, there are more and more types and application scenarios of connectors, and there will be higher requirements for the price and power consumption of communication terminals. The application of battery-free and low-cost passive Internet of Things devices has become the key technology of cellular Internet of Things, which can enrich the types and number of terminals in the network, and then truly realize the Internet of Everything. The passive Internet of Things devices can be based on existing zero-power devices, such as RFID technology, and can be extended on this basis to be suitable for cellular Internet of Things.

In actual network deployment, a technical bottleneck faced by the technology of the passive zero-power communication is the limited coverage distance of the forward link, which is mainly due to the fact that the communication distance of the forward link is limited by the signal strength of wireless signals reaching the zero-power terminal. Based on the existing implementation technology, the zero-power terminal generally needs to consume 10 uw (microwatts) of power to drive a low power circuit. This means that the signal power reaching the zero-power terminal needs to be at least -20 dBm. Limited by the requirements of radio supervision, the transmission power of the network device is generally not too large. For example, in an Industrial Scientific Medical (ISM) band where RFID works, the maximum transmission power is 30 dBm. Therefore, considering the radio propagation loss in space, the transmission distance of the passive zero-power terminal is generally in the range of 10 m to tens of meters.

However, the zero-power terminal with the power storage module has the potential to significantly expand the communication distance, because the zero-power terminal can use the RF power harvesting module to harvest radio waves, so the zero-power terminal can continuously acquire radio power and store the acquired radio power in the power storage unit. After obtaining enough power, the power storage unit can drive the low power circuit to work, which can be used for signal demodulation of the forward link and signal modulation of the backward link. Based on the current technology, the power harvesting module can harvest power and input electric power to the power storage unit when the received radio signal strength is not lower than -30 dBm. Therefore, the coverage of the forward link of the zero-power terminal with the power storage module depends on the RF power harvesting threshold (e.g., -30 dBm). Compared with the passive zero-power terminal, the received radio signal strength is relaxed from -20 dBm to -30 dBm, so that a link budget gain of 10 dB can be obtained, and therefore the downlink coverage can be improved by more than 3 times.

It should be noted that while improving the coverage of the forward link, the zero-power terminal with the power storage module also faces the problem of decreasing charging efficiency. With the decrease of the received signal strength, the power that can be harvested and stored by the power harvesting module is greatly reduced. For example, when the received signal strength is -30 dBm, that is, 1 microwatt, the power that can be harvested and stored is far less than 1 microwatt (the power harvesting efficiency is greatly reduced).

On the other hand, as mentioned earlier, the low power circuit of the zero-power terminal may need to consume an average power of 10 uw.

Therefore, when a zero-power terminal is far away from a network device, a speed of obtaining and storing power by power harvesting is very slow, and the stored power can only be used for the zero-power device to perform communication within a certain period of time. When the stored power is exhausted, the communication between the zero-power device and the network device will be interrupted. The zero-power devices at the edge of the zero-power communication will bring intermittent communication interruption due to insufficient power. In order to reduce the influence of the intermittent communication interruption, it is necessary to introduce corresponding processing mechanisms.

Based on this, the present disclosure provides a method for wireless communication, a terminal device and a network device, which can reduce invalid transmission or scheduling, save transmission resources, reduce time delay and improve system performance of the zero-power communication.

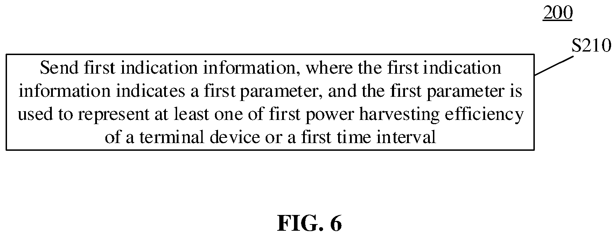

FIG. 6 illustrates a schematic flowchart of a method for wireless communication 200 according to an embodiment of the present disclosure. The method 200 may be interactively performed by a terminal device and a network device. The terminal device illustrated in FIG. 6 may be the terminal device 120 as illustrated in FIG. 1, for example, a zero-power terminal. The network device illustrated in FIG. 6 may be the network device 110 as illustrated in FIG. 1.

As illustrated in FIG. 6, the method 200 may include some or all of the following operations.

At S210, first indication information is sent.

The first indication information indicates a first parameter, and the first parameter is used to represent at least one of first power harvesting efficiency of a terminal device or a first time interval.

In other words, the terminal device indicates at least one of the first power harvesting efficiency or the first time interval to the network device through the first indication information. In an embodiment, the first parameter includes at least one of the first power harvesting efficiency or the first time interval.

In the embodiment, through the indicated first parameter, the network device can know the power harvesting efficiency of the terminal device or the time interval, and further, when the network device performs a downlink transmission or uplink scheduling, the communication parameter can be determined according to the power harvesting efficiency or the time interval indicated by the zero-power device, thereby reducing the invalid transmission or scheduling, saving transmission resources, reducing time delay and improving the system performance of the zero-power communication.

It should be noted that in cellular networks, because the zero-power device is not powered by the battery, it is necessary to provide power supply signals through network devices or dedicated power supply nodes for the zero-power device to obtain power, so as to perform corresponding communication processes. If the network device provides the power supply signal, the power supply signal for power supply and the trigger signal for information transmission may be two signals or may be one signal. In the RFID technology, the power supply signal and the trigger signal are one signal, while in cellular passive Internet of Things technology, the power supply signal and the trigger signal can be two independent signals, and the two signals can be sent in different frequency bands. The network device continuously or intermittently sends power supply signals in a frequency band, and the zero-power device harvests power. After the zero-power device obtains the power, the zero-power device can perform corresponding communication processes, such as measurement, receiving of channel/signal, transmitting of channel/signal, etc. For example, the back scattering communication is performed in another frequency band. In short, the zero-power device is different from the traditional active device. When communicating, the zero-power device needs to harvest power based on power supply signals before performing the communication.

For the zero-power device, it has the function of power harvesting. When the strength of the received power supply signal is less than a certain threshold, the power provided by the power supply signal is less than the power consumed by communication, so it is necessary to obtain enough power through power harvesting to drive the zero-power device to communicate. In this case, the zero-power device cannot guarantee the continuity of communication at all times, but will interrupt the communication due to the need of power harvesting. Therefore, the communication state of the zero-power device may be variable, and the network device cannot know the communication state of the zero-power device. In addition, for the zero-power device, different power storage capabilities and the distance between the zero-power device and the network device will affect the power harvesting efficiency of the zero-power device, and the power harvesting efficiency determines whether the uplink data transmission is successful or not. In the embodiment, the network device can know the power harvesting efficiency of the terminal device or the time interval through the indicated first parameter, and further, when the network device performs a downlink transmission or uplink scheduling, the communication parameters can be determined according to the power harvesting efficiency or the time interval indicated by the zero-power device, and thus reducing the invalid transmission or scheduling, saving transmission resources, reducing time delay and improving the system performance of the zero-power communication.

Further, the term "indication" referred to in the embodiments of the present disclosure may be a direct indication, an indirect indication, or an indication indicates that there is an association. For example, "A indicates B" means that A directly indicates B. For example, B can be obtained through A. "A indicates B" can also mean that A indirectly indicates B. For example, A indicates C, and B can be obtained by C. "A indicates B" can also indicate that there is an association between A and B. For example, A may be the first indication information and B may be information indicated by the first indication information.

In an embodiment, the first indication information may be multiple bits or multiple bit sequences. For example, different bit sequences indicate different power harvesting efficiencies or different bit sequences correspond to different time intervals.

Of course, in other alternative embodiments of the present disclosure, the first indication information may also be used to represent at least one of first power harvesting efficiency of a terminal device or a first time interval. For example, the first indication information may indicate a first parameter and a second parameter. The first parameter is used to represent the first power harvesting efficiency and the second parameter is used to represent the first time interval.

In an embodiment, the first power harvesting efficiency is represented as a power harvesting duration of the terminal device.

In an embodiment, the first power harvesting efficiency represents a power harvesting rate of the terminal device. For example, the first power harvesting efficiency represents a value of power harvested per unit time by the terminal device, or the first power harvesting efficiency represents a duration for the terminal device to harvest preset power.

In an embodiment, at least one of the following applies: the first time interval is represented as a duration between ending of a transmission due to insufficient power of the terminal device and restarting of the transmission; or the first time interval is represented as a duration of communication interruption due to insufficient power of the terminal device.

In an embodiment, the first time interval represents a power harvesting duration of the terminal device.

In other words, the first time interval represents a time interval required for the terminal device to re-transmit after communication interruption occurs, that is, a time interval required between two adjacent transmissions. In an embodiment, the first time interval may include one or more time units. In an embodiment, the time unit may be a symbol, a time slot, a subframe, a frame or other time units or a newly defined time unit in the zero-power communication.

For terminal devices, the distance between each of the terminal devices and the power supply node may be different, and the power harvesting efficiency of the terminal device is different accordingly. With the decrease of the receiving strength of the power supply signal, the speed of harvesting and storing power by the power harvesting module decreases. Therefore, for different terminal devices, the time required for harvesting the power (e.g., 10 uw) required for driving the low power circuit of the terminal device is different. The harvested power can be used for transmission within a certain time range, including back scattering or receiving related processes. The back scattering includes reading stored information, encoding, performing load modulation on incoming signals, etc. The receiving includes demodulating information carried by the incoming signals, decoding, storing and so on.

When the transmission is completed, the terminal device needs to harvest power again to complete the next transmission. Until the power harvesting is completed, the terminal device cannot perform sending or receiving. During this period, if the network device sends information to the terminal device or schedules the terminal device to send information, the terminal device cannot complete the information receiving or sending accordingly.

In this embodiment, the first power harvesting efficiency is represented as a power harvesting duration of the terminal device. In addition, the first time interval is represented as a duration between ending of a transmission due to insufficient power of the terminal device and restarting of the transmission; and/or, the first time interval is represented as a duration of communication interruption due to insufficient power of the terminal device. In view of this, based on at least one of the first power harvesting efficiency or the first time interval indicated by the first indication information reported by the terminal device, the network device can know the power harvesting duration of the terminal device, and the duration between ending of a transmission due to insufficient power of the terminal device and restarting of the transmission or the duration of communication interruption due to insufficient power of the terminal device, which can reduce the useless transmission or uplink scheduling of the network device.

It should be noted that the first parameter referred to in the present disclosure is semi-static information, which is mainly related to the strength of the power supply signal received by the terminal device. In other alternative embodiments, other information having the same or similar function may also be replaced, which is not specifically limited in the present disclosure.

In some embodiments, the method 100 may further include the following operation.

The first parameter is determined based on at least one of: a power harvesting capability of the terminal device or strength of a power supply signal received by the terminal device.

In an embodiment, the first parameter may be determined according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

In other words, the terminal device may determine the first parameter according to at least one of the receiving strength of the power supply signal or the power harvesting capability of the terminal device. In other words, the terminal device determines, based on the first corresponding relationship, the parameter corresponding to the strength of the power supply signal received by the terminal device as the first parameter, the first corresponding relationship includes multiple parameters corresponding to multiple strengths of the power supply signal respectively, and the multiple strengths include the strength of the power supply signal received by the terminal device. In other words, the terminal device can determine, based on the second corresponding relationship, the parameter corresponding to the power harvesting capability of the terminal device as the first parameter, the second corresponding relationship includes multiple harvesting capabilities and multiple parameters corresponding to the multiple harvesting capabilities respectively, and the multiple harvesting capabilities include the power harvesting capability of the terminal device.

In an embodiment, the method 200 may further include the following operation.

The power harvesting capability of the terminal device is reported.

In an embodiment, the power harvesting capability refers to efficiency for the terminal device to harvest power under a power supply signal of preset strength.

In other words, the power harvesting capability includes the power harvesting efficiency of the terminal device when the receiving strength of the power supply signal is determined. It should be noted that the preset strength referred to above may be any strength at which the terminal can harvest power, which is not specifically limited in the present disclosure.

In some embodiments, the S210 may include the following operation.

The first indication information is sent periodically.

In other words, the reporting of the first indication information may be periodic reporting.

In an embodiment, a sending period of the first indication information is configured by a network device or predefined.

In an embodiment, a sending period of the first indication information may be configured by a network device via a trigger signal.

It should be noted that, in the embodiments of the present disclosure, the "predefinition" can be realized by pre-storing corresponding codes, tables or other means that can indicate relevant information in devices (e.g., including the terminal device and the network device), and the specific implementation methods thereof are not limited in the present disclosure. For example, "predefined" can refer to defined in the protocol. In an embodiment, the "protocol" may refer to a standard protocol in the communication field, and may include, for example, an LTE protocol, an NR protocol, and related protocols applied in future communication systems, which are not specifically limited in the present disclosure.

In some embodiments, the S210 may include the following operation.

First indication information is reported in a triggering manner.

In other words, the reporting of the first indication information may be event-triggered reporting, that is, the terminal device is triggered to report the first indication information by a trigger event.

In some implementations, based on at least of the first parameter or strength of a power supply signal received by the terminal device, the terminal device is triggered to report the first indication information.

In an embodiment, the terminal device is triggered to report the first indication information in a case of meeting at least one of:
the first parameter meets a first threshold;
a change of the first parameter meets a second threshold;
the strength of the power supply signal received by the terminal device meets a third threshold; or
a change of the strength of the power supply signal received by the terminal device meets a fourth threshold.

In an embodiment, at least one of the first threshold, the second threshold, the third threshold, or the fourth threshold is configured by a network device or predefined.

It should be noted that the "meet" referred to in the present disclosure may be less than or equal to or greater than or equal to, which is not specifically limited in the present disclosure. In other words, the reporting of the first indication information can be event-triggered reporting, and the event-triggered reporting may means triggering the reporting of the first indication information according to the change of power harvesting efficiency or the change of the time interval. For example, the change of power harvesting efficiency or the change of the time interval exceeds or falls below a certain threshold, or the change of receiving strength of the power supply signal reaches or falls below a certain threshold, or the receiving strength of the power supply signal reaches or falls below a certain threshold, all of which can trigger the terminal device to report the first indication information. In an embodiment, the certain threshold may be a predefined threshold or a network-configured threshold.

In other implementations, the terminal device receives second indication information, and the second indication information is used for instructing the terminal device to report the first indication information; and the terminal device is triggered, through the second indication information, to report the first indication information.

In other words, the second indication information is used for triggering the terminal device to report the first indication information, or after receiving the second indication information, the terminal device sends the first indication information to the network device in response to the second indication information. That is to say, the reporting can be performed according to the indication of the network device. For example, when the network device needs to send downlink data or control information to the terminal device, the second indication information is carried through the downlink data or the control information to instruct the terminal device to report the first indication information.

In other implementations, scheduling request information is sent, the scheduling request information is used for requesting the network device to allocate uplink transmission resources for the terminal device; and the terminal device is triggered, through the scheduling request information, to report the first indication information.

In other words, the scheduling request information is used for triggering the terminal device to report the first indication information. In other words, the terminal device can trigger the reporting of the first indication information according to the uplink data transmission. For example, the terminal device needs to perform an uplink transmission, and may need to send scheduling request information to the network device to request uplink resources, and the scheduling request information can be used to trigger the terminal device to report the first indication information. In an embodiment, the scheduling request information and the first indication information may be sent together or separately. In other words, the terminal device may simultaneously send the scheduling request information and the first indication information, and the terminal device may also send the first indication information after sending the scheduling request information, which is not specifically limited in the present disclosure.

In some embodiments, the first indication information is carried in a back scattering signal.

Exemplarily, the first indication information is carried in a back scattering signal scheduled by the trigger signal at the first time. For another example, the first indication information is carried in a back scattering signal sent on the first time unit. In an embodiment, the first time unit may be a predefined time unit or a time unit scheduled by the network device. For example, the first time unit may be a time unit scheduled by the network device through the trigger signal.

In some scenarios, the network device does not know the current power storage state of the terminal device, and does not know whether the terminal device can have enough power to meet the requirement of communication. For example, in addition to completing the communication between terminal device and network device, the power harvesting of the terminal device may also perform other work that requires power consumption, such as synchronization, signal measurement and information harvesting of the sensor and so on. Through the first parameter, the network device can only know at least one of the first power harvesting efficiency of the terminal device or the first time interval, and the at least one of the first power harvesting efficiency or the first time interval is only related to the communication with the network device and cannot reflect other power consumption information of the terminal device. Based on this, the network device cannot accurately know the power storage state of the terminal device.

In some embodiments, the method 200 may further include the following operation.

Third indication information is sent. The third indication information indicates at least one of a power storage state of the terminal device or a communication duration capable of being maintained by the terminal device.

In the embodiment, at least one of a power storage state of the terminal device or a communication duration capable of being maintained by the terminal device is indicated through the third indication information, so that the network device can know the at least one of the power storage state of the terminal device or the communication duration capable of being maintained by the terminal device. Based on this, when the network device schedules the terminal device or communicates with the terminal device based on the third indication information, it is advantageous for the network device to know whether and when the communication between the terminal device and the network device will be interrupted, and further, it is advantageous for the network device to take corresponding measures to reduce the influence caused by the communication interruption, such as avoiding the transmission failure of key information and meaningless scheduling made by the network device to the terminal device during the communication interruption, so as to improve the communication performance.

In an embodiment, the power storage state is represented as a value of power that has been harvested by the terminal device.

In an embodiment, the power storage state is represented as the remaining value of power of the terminal device.

In an embodiment, the power storage state represents the power harvesting state of the terminal device, for example, x% of the electricity quantity has been harvested, and x is a positive integer.

In an embodiment, the communication duration capable of being maintained indicates a duration that the terminal device can complete the transmission.

It should be noted that at least one of the power storage state or the communication duration capable of being maintained related to the present disclosure is intended to reflect the dynamic information of the remaining power of the terminal device. In other alternative embodiments, at least one of the power storage state or the communication duration capable of being maintained may also be replaced by other information having the same or similar function, which is not specifically limited in the present disclosure.

In some embodiments, the third indication information is sent periodically.

In other words, the reporting of the third indication information may be periodic reporting.

In an embodiment, a sending period of the third indication information is configured by a network device or predefined.

In an embodiment, a sending period of the third indication information may be configured by a network device via a trigger signal.

It should be noted that, in the embodiments of the present disclosure, the "predefinition" can be realized by pre-storing corresponding codes, tables or other means that can indicate relevant information in devices (e.g., including the terminal device and the network device), and the specific implementation methods thereof are not limited in the present disclosure. For example, "predefined" can refer to defined in the protocol. In an embodiment, the "protocol" may refer to a standard protocol in the communication field, and may include, for example, an LTE protocol, an NR protocol, and related protocols applied in future communication systems, which are not specifically limited in the present disclosure.

In some embodiments, the third indication information is reported in a triggering manner.

In other words, the reporting of the third indication information may be event-triggered reporting, i.e., the terminal device is triggered to report the third indication information by a trigger event.

In some implementations, the terminal device is triggered to report the third indication information based on at least one of the power storage state, the communication duration or strength of a power supply signal received by the terminal device.

In an embodiment, the terminal device is triggered to report the third indication information in a case of meeting at least one of:
the power storage state meets a fifth threshold;
a change of the power storage state meets a sixth threshold;
the communication duration meets a seventh threshold;
a change of the communication duration meets an eighth threshold;
the strength of the power supply signal received by the terminal device meets a ninth threshold; or
a change of the strength of the power supply signal received by the terminal device meets a tenth threshold.

In an embodiment, at least one of the fifth threshold, the sixth threshold, the seventh threshold, the eighth threshold, the ninth threshold, or the tenth threshold is configured by a network device or predefined.

It should be noted that the "meet" referred to in the present disclosure may be less than or equal to or greater than or equal to which is not specifically limited in the present disclosure. In other words, the reporting of the third indication information may be event-triggered reporting, and the event-triggered reporting means triggering the reporting of the third indication information according to the change of the power storage state of the terminal device. For example, when the power harvesting of the terminal device completes a certain proportional threshold, the terminal device is triggered to report the third indication information. The proportional threshold may be a predefined or network-configured threshold. For another example, according to whether the harvested power can activate the processor circuit, the terminal device can perform corresponding operations, such as sensing the third indication information and reporting the third indication information.

In other implementations, fourth indication information is received. The fourth indication information is used for instructing the terminal device to report the third indication information; and the terminal device is triggered, through the fourth indication information, to report the third indication information.

In other words, the fourth indication information is used for triggering the terminal device to report the third indication information, or after receiving the fourth indication information, the terminal device sends the third indication information to the network device in response to the fourth indication information. That is to say, the reporting can be performed according to the indication of the network device. For example, when the network device needs to send downlink data or control information to the terminal device, the fourth indication information is carried through the downlink data or the control information to instruct the terminal device to report the third indication information.

In other implementations, scheduling request information is sent. The scheduling request information is used for requesting the network device to allocate uplink transmission resources for the terminal device; and the terminal device is triggered, through the scheduling request information, to report the third indication information.

In other words, the scheduling request information is used for triggering the terminal device to report the third indication information. In other words, the terminal device can trigger the reporting of the third indication information according to the uplink data transmission. For example, the terminal device needs to perform an uplink transmission, and may need to send scheduling request information to the network device to request uplink resources, and the scheduling request information can be used to trigger the terminal device to report the third indication information. In an embodiment, the scheduling request information and the third indication information may be sent together or separately. In other words, the terminal device may simultaneously send the scheduling request information and the third indication information, and the terminal device may also send the third indication information after sending the scheduling request information, which is not specifically limited in the present disclosure.

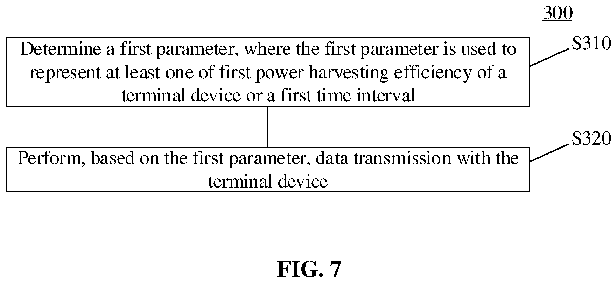

The method 200 is described above from the perspective of a terminal device with reference to FIG. 6 and the method 300 will be described below from the perspective of a network device with reference to FIG. 7.

As illustrated in FIG. 7, the method 300 includes the following operations.

At S310, a first parameter is determined. The first parameter is used to represent at least one of first power harvesting efficiency of a terminal device or a first time interval.

At S320, data transmission is performed with the terminal device based on the first parameter.

In some embodiments, the S320 may include:
determining, based on the first parameter, at least one of:
a second time interval for scheduling the terminal device to perform back scattering communication;
a period of Discontinuous Reception (DRX);
a period of a semi-persistent scheduling resource; or
a period of an unlicensed resource.

In an embodiment, at least one of the following applies: the second time interval is a time interval between downlink data and feedback information; or the second time interval is a time interval between a trigger signal and a back scattering signal.

In an embodiment, the second time interval is equal to a sum of a transmission delay and the first time interval.

In other words, after determining the first parameter, the network device can send information to the terminal device or schedule the terminal device to perform an uplink transmission according to the first parameter. Taking the first time interval as an example, the first time interval is the minimum time interval required to be met when the network device sends information to the terminal device or when the network device schedules the terminal device to perform an uplink transmission. For another example, the network device may determine a period during which the terminal device performs DRX according to the first time interval. For another example, the network device may determine a period of resources for semi-persistent scheduling by the terminal device or a period of an unlicensed resource according to the first time interval. For example, for a terminal device that needs to report data information or control information periodically, the network device can configure a semi-persistent scheduling resource to the terminal device, and the period of the semi-persistent scheduling resource needs to meet the first time interval. For another example, the network device can determine delay information of performing HARQ-ACK feedback by the terminal device according to the first time interval. That is, when the terminal device receives the downlink data, if the terminal device exhausts the harvested power, the terminal device needs to harvest power to perform the HARQ-ACK feedback after a certain time interval. The network device can determine, according to the first time interval, a time interval between the time when the terminal device performs the HARQ-ACK feedback and the time when the downlink data is sent. For another example, the network device may determine, according to the first time interval, a time interval between the time when the terminal device receives the scheduling information and the time when the terminal device sends data. That is, when the terminal device receives the scheduling information, if the terminal device exhausts the harvested power, the terminal device needs to harvest power to send (uplink scheduling) or receive (downlink scheduling) data after a certain time interval.

Of course, in other alternative embodiments, the network device may further determine, based on the first parameter, other parameters, such as a modulation mode, a data rate, an encoding mode, a data block size, or other parameters that affect the power consumption of the terminal device. The embodiments of the present disclosure are not specifically limited thereto.

In some embodiments, at least one of the following applies: the first power harvesting efficiency is represented as a power harvesting duration of the terminal device; the first time interval is represented as a duration between ending of a transmission due to insufficient power of the terminal device and restarting of the transmission; or the first time interval is represented as a duration of communication interruption due to insufficient power of the terminal device.

In some embodiments, the S310 may include the following operation.

The first parameter is determined based on at least one of: a power harvesting capability of the terminal device or strength of a power supply signal received by the terminal device.

In an embodiment, the first parameter is determined according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

In an embodiment, the method 300 may further include the following operation.

The power harvesting capability of the terminal device is reported.

In an embodiment, the power harvesting capability refers to efficiency for the terminal device to harvest power under a power supply signal of preset strength.

In some embodiments, the S310 may include the following operation.

First indication information is received.

The first indication information indicates the first parameter.

In an embodiment, the first indication information is received periodically.

In an embodiment, a sending period of the first indication information is configured by a network device or predefined.

In some embodiments, the method 300 may further include the following operation.

Second indication information is sent. The second indication information is used for instructing the terminal device to report the first indication information.

In some embodiments, the first indication information is carried in a back scattering signal.

In some embodiments, the method 300 may further include the following operation.

Third indication information is received. The third indication information indicates at least one of a power storage state of the terminal device or a communication duration capable of being maintained by the terminal device.

The terminal device is scheduled within a duration corresponding to the power storage state or within the communication duration.

In other words, after receiving the third indication information reported by the terminal device, the network device can send information to the terminal device according to the third indication information, or determine a duration for scheduling the terminal device to perform an uplink transmission. The network device may estimate, based on at least one of the power storage state or the communication duration capable of being maintained, a duration that the terminal device supports downlink reception or uplink transmission, thereby determining the transmitting time of downlink information or determining the duration that the terminal device is scheduled to perform an uplink transmission. The at least one of the power storage state or the communication duration capable of being maintained reflects the real-time power storage information of the terminal device, and the network device can judge, based on the power storage information, the duration of a downlink transmission or uplink scheduling. For the next transmission, the network device needs to obtain the updated real-time power storage information of the terminal device to determine the duration for the transmission.

In an embodiment, the third indication information is received periodically.

In an embodiment, a sending period of the third indication information is configured by a network device or predefined.

In an embodiment, the method 300 may further include the following operation.

Fourth indication information is sent. The fourth indication information is used for instructing the terminal device to report the third indication information.

It should be noted that in the solution of interaction between the network device and the terminal device, for operations of the network device, the corresponding operations of the terminal device can be referred to and will not be repeated here for the sake of brevity.

Preferred embodiments of the present disclosure have been described in detail with reference to the accompanying drawings, but the present disclosure is not limited to the specific details of the above embodiments. Within the scope of the technical conception of the present disclosure, various simple variants can be made to the technical solution of the present disclosure, and these simple variants all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, any combination may be made between the various embodiments of the present disclosure so long as it does not depart from the idea of the present disclosure and is likewise to be regarded as the disclosure of the present disclosure.

It should also be understood that in the various method embodiments of the present disclosure, the size of the sequence number of the above-mentioned processes does not mean the order of execution, and the execution order of the processes should be determined by their functions and inherent logic, and should not be defined in any way by the implementation process of the embodiments of the present disclosure. Further, in the embodiments of the present disclosure, the terms "downlink" and "uplink" are used to denote the transmission direction of the signal or data. The term "downlink" is used to denote that the transmission direction of the signal or data is a first direction of transmitting from the station to the user equipment of the cell, and the term "uplink" is used to denote that the transmission direction of the signal or data is a second direction of transmitting from the user equipment of the cell to the station. For example, "downlink signal" means that the transmission direction of the signal is the first direction. In addition, in the embodiments of the present disclosure, the term "and/or" herein is only an association relationship describing associated objects, which means that there may be three relationships. Specifically, "A and/or B" may have three meanings: A exists alone, A and B exist at the same time and B exists alone. In addition, the character "j" herein generally indicates that the associated objects before and after the character "/" are in an "or" relationship.

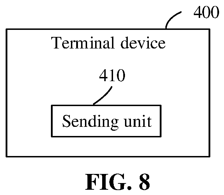

The method embodiments of the present disclosure are described in detail above with reference to FIG. 1 to FIG. 7 and the apparatus embodiments of the present disclosure are described in detail below with reference to FIG. 8 to FIG. 11.

FIG. 8 is a schematic block diagram of a terminal device 400 according to an embodiment of the present disclosure.

As illustrated in FIG. 8, the terminal device 400 may include a sending unit 410.

### The sending unit 410 is configured to send first indication information.

The first indication information indicates a first parameter, and the first parameter is used to represent at least one of first power harvesting efficiency of a terminal device or a first time interval.

In some embodiments, the first power harvesting efficiency is represented as a power harvesting duration of the terminal device; the first time interval is represented as a duration between ending of a transmission due to insufficient power of the terminal device and restarting of the transmission; or the first time interval is represented as a duration of communication interruption due to insufficient power of the terminal device.

In some embodiments, the sending unit 410 is further configured to determine the first parameter based on at least one of: a power harvesting capability of the terminal device or strength of a power supply signal received by the terminal device.

In some embodiments, the sending unit 410 is specifically configured to determine the first parameter according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

In some embodiments, the sending unit 410 is further configured to report the power harvesting capability of the terminal device.

In some embodiments, the power harvesting capability refers to efficiency for the terminal device to harvest power under a power supply signal of preset strength.

In some embodiments, the sending unit 410 is specifically configured to send the first indication information periodically.

In some embodiments, a sending period of the first indication information is configured by a network device or predefined.

In some embodiments, the sending unit 410 is specifically configured to report the first indication information in a triggering manner.

In some embodiments, the sending unit 410 is specifically configured to trigger, based on at least of the first parameter or strength of a power supply signal received by the terminal device, the terminal device to report the first indication information.

In some embodiments, the sending unit 410 is specifically configured to trigger the terminal device to report the first indication information in a case of meeting at least one of:
the first parameter meets a first threshold;
a change of the first parameter meets a second threshold;
the strength of the power supply signal received by the terminal device meets a third threshold; or
a change of the strength of the power supply signal received by the terminal device meets a fourth threshold.

In some embodiments, at least one of the first threshold, the second threshold, the third threshold, or the fourth threshold is configured by a network device or predefined.

In some embodiments, the sending unit 410 is specifically configured to: receive second indication information, the second indication information being used for instructing the terminal device to report the first indication information; and trigger, through the second indication information, the terminal device to report the first indication information.

In some embodiments, the sending unit 410 is specifically configured to: send scheduling request information, the scheduling request information being used for requesting a network device to allocate uplink transmission resources for the terminal device; and trigger, through the scheduling request information, the terminal device to report the first indication information.

In some embodiments, the first indication information is carried in a back scattering signal.

In some embodiments, the sending unit 410 is further configured to send third indication information. The third indication information indicates at least one of a power storage state of the terminal device or a communication duration capable of being maintained by the terminal device.

In some embodiments, the power storage state is represented as a value of power that has been harvested by the terminal device.

In some embodiments, the sending unit 410 is specifically configured to send the third indication information periodically.

In some embodiments, a sending period of the third indication information is configured by a network device or predefined.

In some embodiments, the sending unit 410 is specifically configured to report the third indication information in a triggering manner.

In some embodiments, the sending unit 410 is specifically configured to trigger, based on at least one of the power storage state, the communication duration or strength of a power supply signal received by the terminal device, the terminal device to report the third indication information.

In some embodiments, the sending unit 410 is specifically configured to trigger the terminal device to report the third indication information in a case of meeting at least one of:
the power storage state meets a fifth threshold;
a change of the power storage state meets a sixth threshold;
the communication duration meets a seventh threshold;
a change of the communication duration meets an eighth threshold;
the strength of the power supply signal received by the terminal device meets a ninth threshold; or
a change of the strength of the power supply signal received by the terminal device meets a tenth threshold.

In some embodiments, at least one of the fifth threshold, the sixth threshold, the seventh threshold, the eighth threshold, the ninth threshold, or the tenth threshold is configured by a network device or predefined.

In some embodiments, the sending unit 410 is specifically configured to receive fourth indication information, the fourth indication information being used for instructing the terminal device to report the third indication information; and trigger, through the fourth indication information, the terminal device to report the third indication information.

In some embodiments, the sending unit 410 is specifically configured to send scheduling request information, the scheduling request information being used for requesting a network device to allocate uplink transmission resources for the terminal device; and trigger, through the scheduling request information, the terminal device to report the third indication information.

It should be understood that the apparatus embodiments and the method embodiments may correspond to each other, and for the similar descriptions, the method embodiments may be referred to. In particular, the terminal device 400 illustrated in FIG. 8 may correspond to a corresponding body for performing the method 200 according to the embodiment of the present disclosure, and the foregoing and other operations and/or functions of various units in the terminal device 400, which will not be repeated here for the sake of brevity, are respectively used to implement corresponding flows in various methods in FIG. 6.

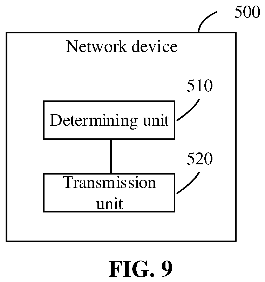

FIG. 9 is a schematic block diagram of a network device 500 according to an embodiment of the present disclosure.

As illustrated in FIG. 9, the network device 500 may include a determining unit 510 and a transmission unit 520.

The determining unit 510 is configured to determine a first parameter. The first parameter is used to represent at least one of first power harvesting efficiency of a terminal device or a first time interval.

The transmission unit 520 is configured to perform, based on the first parameter, data transmission with the terminal device.

In some embodiments, the transmission unit 520 is specifically configured to determine, based on the first parameter, at least one of:
a second time interval for scheduling the terminal device to perform back scattering communication;
a period of DRX;
a period of a semi-persistent scheduling resource; or
a period of an unlicensed resource.

In some embodiments, at least one of the following applies: the second time interval is a time interval between downlink data and feedback information; or the second time interval is a time interval between a trigger signal and a back scattering signal.

In some embodiments, at least one of the following applies: the first power harvesting efficiency is represented as a power harvesting duration of the terminal device; the first time interval is represented as a duration between ending of a transmission due to insufficient power of the terminal device and restarting of the transmission; or the first time interval is represented as a duration of communication interruption due to insufficient power of the terminal device.

In some embodiments, the determining unit 510 is specifically configured to determine the first parameter according to at least one of: a power harvesting capability of the terminal device or strength of a power supply signal received by the terminal device.

In some embodiments, the determining unit 510 is specifically configured to determine the first parameter according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

In some embodiments, the transmission unit 520 is further configured to report the power harvesting capability of the terminal device.

In some embodiments, the power harvesting capability refers to efficiency for the terminal device to harvest power under a power supply signal of preset strength.

In some embodiments, the transmission unit 520 is further configured to receive the first indication information.

The first indication information indicates the first parameter.

In some embodiments, the transmission unit 520 is specifically configured to receive the first indication information periodically.

In some embodiments, a sending period of the first indication information is configured by a network device or predefined.

In some embodiments, the transmission unit 520 is further configured to send second indication information. The second indication information is used for instructing the terminal device to report the first indication information.

In some embodiments, the first indication information is carried in a back scattering signal.

In some embodiments, the transmission unit 520 is further configured to receive third indication information, the third indication information indicating at least one of a power storage state of the terminal device or a communication duration capable of being maintained by the terminal device; and schedule the terminal device within a duration corresponding to the power storage state or within the communication duration.

In some embodiments, the transmission unit 520 is specifically configured to receive the third indication information periodically.

In some embodiments, a sending period of the third indication information is configured by a network device or predefined.

In some embodiments, the transmission unit 520 is specifically configured to send fourth indication information. The fourth indication information is used for instructing the terminal device to report the third indication information.

It should be understood that the apparatus embodiments and the method embodiments may correspond to each other, and for similar descriptions, the method embodiments may be referred to. In particular, the network device 500 illustrated in FIG. 9 may correspond to a corresponding body for performing the method 300 according to the embodiment of the present disclosure, and the foregoing and other operations and/or functions of various units in the network device 500, which will not be repeated here for the sake of brevity, are respectively used to implement corresponding flows in various methods in FIG. 7.

The communication device of the embodiments of the present disclosure is described above from the perspective of functional modules with reference to the accompanying drawings. It should be understood that the functional modules may be implemented in hardware form, by instructions in software form, or by a combination of hardware and software modules. In particular, each operation of the method embodiments in the embodiments of the present disclosure can be completed by the integrated logic circuit of the hardware in the processor and/or the instruction in the form of software, and the operations of the method disclosed in combination with the embodiments of the present disclosure can be directly embodied as being executed and completed by a hardware decoding processor or can be executed and completed by a combination of the hardware and software modules in the decoding processor. In an embodiment, the software module may be located in a Random Access Memory (RAM), a flash memory, a Read-Only Memory (ROM), a programmable read-only memory, an electrically erasable programmable memory, a register or other storage media mature in the art. The storage medium is located in the memory, and the processor reads the information in the memory and completes the operations in the method embodiments in combination with its hardware.

For example, the sending unit 410 and the transmission unit 520 referred to above may be implemented by a transceiver and the determining unit 510 referred to above may be implemented by a processor.

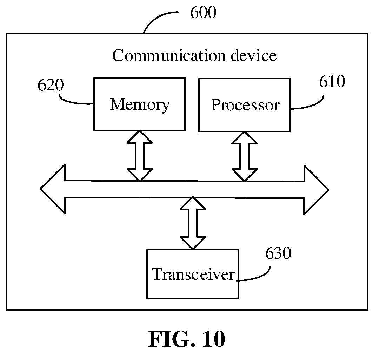

FIG. 10 is a schematic structural diagram of a communication device 600 according to an embodiment of the present disclosure.

As illustrated in FIG. 10, the communication device 600 may include a processor 610.

The processor 610 may invoke and run a computer program from a memory to implement the method in the embodiments of the present disclosure.

As illustrated in FIG. 10, the communication device 600 may further include a memory 620.

The memory 620 may be used for storing indication information and may also be used for storing codes, instructions and the like executed by the processor 610. The processor 610 may invoke and run a computer program from the memory 620 to implement the method in the embodiments of the present disclosure. The memory 620 may be a separate device independent of the processor 610 or may be integrated within the processor 610.

As illustrated in FIG. 10, the communication device 600 may further include a transceiver 630.

The processor 610 may control the transceiver 630 to communicate with other devices, and in particular, the processor 610 may send information or data to other devices or receive information or data transmitted by other devices. The transceiver 630 may include a transmitter and a receiver. The transceiver 630 may further include antennas, and the number of the antennas may be one or more.

It should be understood that the various components in the communication device 600 are connected by a bus system. The bus system includes a power bus, a control bus and a state signal bus, in addition to a data bus.

It should also be understood that the communication device 600 may be the terminal device of the embodiments of the present disclosure, and the communication device 600 may implement corresponding flows implemented by the terminal device in various methods of the embodiments of the present disclosure. That is, the communication device 600 of the embodiments of the present disclosure may correspond to the terminal device 400 in the embodiments of the present disclosure, and may correspond to a corresponding body for performing the method 200 according to the embodiment of the present disclosure, which will not be repeated here for the sake of brevity. Similarly, the communication device 600 may be the network device of the embodiments of the present disclosure and the communication device 600 may implement corresponding flows implemented by the network device in various methods of the embodiments of the present disclosure. That is, the communication device 600 of the embodiments of the present disclosure may correspond to the network device 500 of the embodiments of the present disclosure and may correspond to a corresponding body for performing the method 300 according to the embodiment of the present disclosure, which will not be repeated here for the sake of brevity.

In addition, an embodiment of the present disclosure further provides a chip.

For example, the chip may be an integrated circuit chip having signal processing capabilities that can implement or perform the methods, operations and logic diagrams disclosed in the embodiments of the present disclosure. The chip may also be referred to as a system-level chip, a system chip, a chip system or a chip-on system chip, etc. In an embodiment, the chip can be applied to various communication devices, so that the communication device mounted with the chip can perform the methods, operations and logic block diagrams disclosed in the embodiments of the present disclosure.

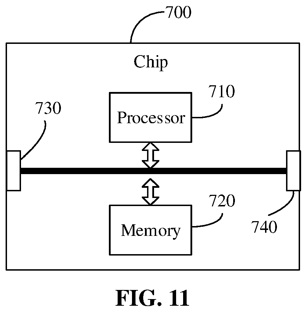

FIG. 11 is a schematic structural diagram of a chip 700 according to an embodiment of the present disclosure.

As illustrated in FIG. 11, the chip 700 includes a processor 710.

The processor 710 may invoke and run a computer program from a memory to implement the method in the embodiments of the present disclosure.

As illustrated in FIG. 11, the chip 700 may further include a memory 720.

The processor 710 may invoke and run a computer program from the memory 720 to implement the method in the embodiments of the present disclosure. The memory 720 may be used to store indication information and may also be used to store codes, instructions and the like executed by the processor 710. The memory 720 may be a separate device independent of the processor 710 or may be integrated within the processor 710.

As illustrated in FIG. 11, the chip 700 may further include an input interface 730.

The processor 710 may control the input interface 730 to communicate with other devices or chips and in particular may obtain information or data sent by other devices or chips.

As illustrated in FIG. 11, the chip 700 may further include an output interface 740.

The processor 710 may control the output interface 740 to communicate with other devices or chips and in particular may output information or data to other devices or chips.

It should be understood that the chip 700 may be applied to the network device in the embodiments of the present disclosure, and the chip may implement corresponding flows implemented by the network device in various methods of the embodiments of the present disclosure, and may also implement corresponding flows implemented by the terminal device in various methods of the embodiments of the present disclosure, which will not be repeated here for the sake of brevity.

It should also be understood that the various components in the chip 700 are connected by a bus system. The bus system includes a power bus, a control bus and a state signal bus, in addition to a data bus.

The processor referred to above may include, but is not limited to the followings.

The general purpose processor, the Digital Signal Processor (DSP), the Application Specific Integrated Circuit (ASIC), the Field Programmable Gate Array (FPGA) or other programmable logic devices, discrete gates or transistor logic devices, discrete hardware components and so on.

The processor may be used to implement or perform the methods, operations, and logic diagrams disclosed in the embodiments of the present disclosure. The operations of the method disclosed in combination with the embodiments of the present disclosure can be directly embodied as being executed and completed by a hardware decoding processor or can be executed and completed by a combination of the hardware and software modules in the decoding processor. The software module may be located in a random access memory, a flash memory, a read only memory, a programmable read-only memory, an erasable programmable memory, a register and other storage media mature in the art. The storage medium is located in the memory, and the processor reads the information in the memory and completes the operations of the method in combination with its hardware.

The memory referred to above includes, but is not limited to at least one of the volatile memory or the nonvolatile memory.

The nonvolatile memory may be an ROM, a Programmable ROM (PROM), an Erasable PROM (EPROM), an Electrically Erasable EPROM (EEPROM), or a flash memory. The volatile memory may be an RAM which serves as an external cache. By way of illustration, but not limitation, many forms of RAM are available, such as a static RAM (SRAM), a dynamic RAM (DRAM), a synchronous DRAM (SDRAM), a double data rate SDRAM (DDR SDRAM), an Enhanced SDRAM (ESDRAM), a synch link DRAM (SLDRAM), and a direct Rambus RAM (DR RAM).

It should be noted that the memory described herein is intended to include these and any other suitable types of memories.

An embodiment of the present disclosure further provides a computer-readable storage medium for storing a computer program. The computer-readable storage medium stores one or more programs including instructions that, when executed by a portable electronic device including multiple application programs, cause the portable electronic device to perform the method for wireless communication provided by the present disclosure. In an embodiment, the computer-readable storage medium can be applied to the network device in the embodiments of the present disclosure, and the computer program causes the computer to perform corresponding flows implemented by the network device in various methods of the embodiments of the present disclosure, which will not be repeated here for the sake of brevity. In an embodiment, the computer-readable storage medium can be applied to the mobile terminal/terminal device in the embodiments of the present disclosure, and the computer program causes the computer to perform corresponding flows implemented by the mobile terminal/terminal device in various methods of the embodiments of the present disclosure, which will not be repeated here for the sake of brevity.

An embodiment of the present disclosure further provides a computer program product, which includes a computer program. In an embodiment, the computer program product may be applied to the network device in the embodiments of the present disclosure, and the computer program causes the computer to perform corresponding flows implemented by the network device in various methods of the embodiments of the present disclosure, which will not be repeated here for the sake of brevity. In an embodiment, the computer program product may be applied to the mobile terminal/terminal device in the embodiments of the present disclosure, and the computer program causes the computer to perform corresponding flows implemented by the mobile terminal/terminal device in various methods of the embodiments of the present disclosure, which will not be repeated here for the sake of brevity.

An embodiment of the present disclosure further provides a computer program. When the computer program is executed by a computer, the computer is caused to perform the method for wireless communication provided by the present disclosure. In an embodiment, the computer program can be applied to the network device in the embodiments of the present disclosure, and when the computer program is run on the computer, the computer is caused to perform corresponding flows implemented by the network device in various methods of the embodiments of the present disclosure, which will not be repeated here for the sake of brevity. In an embodiment, the computer program can be applied to the mobile terminal/terminal device in the embodiments of the present disclosure, and when the computer program is run on the computer, the computer is caused to perform corresponding flows implemented by the mobile terminal/terminal device in various methods of the embodiments of the present disclosure, which will not be repeated here for the sake of brevity.

An embodiment of the present disclosure further provides a communication system. The communication system may include the above-mentioned terminal device and the network device to form the communication system 100 as illustrated in FIG. 1 which will not be repeated here for the sake of brevity. It should be noted that the term "system" in the present disclosure can also be referred to as "network management architecture" or "network system".

It should also be understood that the term used in the embodiments of the present disclosure and the appended claims is for the purpose of describing specific embodiments only and is not intended to limit the embodiments of the present disclosure. For example, the singular forms of "an," "said," "mentioned" and "the" as used in the embodiments of the present disclosure and the appended claims are also intended to include multiple forms, unless the context clearly dictates otherwise.

Those skilled in the art will appreciate that the various example units and algorithm operations described in connection with the embodiments disclosed herein can be implemented in electronic hardware or a combination of computer software and electronic hardware. Whether these functions are performed in hardware or software depends on the specific application and design constraints of the technical solutions. Skilled artisans may use different methods for each particular application to implement the described functionality but such implementation should not be considered beyond the scope of the embodiments of the present disclosure. If the function is implemented in the form of a software functional unit and is sold or used as an independent product, it can be stored in a computer readable storage medium. Based on such an understanding, the technical solution of the disclosure or the part that contributes to the related art or the part of the technical solution may be embodied in the form of a software product essentially, and the computer software product is stored in a storage medium including several indications to make a computer device (which may be a personal computer, a server or a network device, etc.) execute all or part of the operations of the methods described in the each embodiment of the disclosure. The aforementioned storage medium includes: U disks, mobile hard disks, ROMs, RAMs, magnetic disks or optical disks and other media that can store program codes.

Those skilled in the art will also appreciate that, for the sake of convenience and brevity of description, for specific operating processes of the above-described systems, apparatuses, and units, the corresponding flow in the foregoing method embodiments may be referred to and will not be repeated herein. In several embodiments provided by the present disclosure, it should be understood that the disclosed systems, apparatuses and methods may be implemented in other ways. For example, the partition of units or modules or components in the above-described apparatus embodiments is only a logical functional partition, which may be implemented in another way in the actual implementation. For example, multiple units or modules or components may be combined or integrated into another system, or some units or modules or components may be ignored or not performed. For another example, the units/modules/components described above as separation/display means may or may not be physically separated, i.e., may be located in one place, or may be distributed over multiple network elements. Some or all of the units/modules/components may be selected according to actual needs to achieve the object of the embodiments of the present disclosure. Finally, it should be noted that the coupling, or direct coupling or communication connection between each other illustrated or discussed above may be indirect coupling or communication connection through some interface, device or unit, and may be electrical, mechanical or other form.

The foregoing descriptions are merely specific embodiments of the present disclosure, but the protection scope of the present disclosure is not limited thereto. Any change or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for wireless communication, comprising:
sending first indication information,
wherein the first indication information indicates a first parameter, and the first parameter is used to represent at least one of first power harvesting efficiency of a terminal device or a first time interval.

2. The method of claim 1, wherein at least one of the following applies: the first power harvesting efficiency is represented as a power harvesting duration of the terminal device; the first time interval is represented as a duration between ending of a transmission due to insufficient power of the terminal device and restarting of the transmission; or the first time interval is represented as a duration of communication interruption due to insufficient power of the terminal device.

3. The method of claim 1 or 2, further comprising:
determining the first parameter based on at least one of: a power harvesting capability of the terminal device or strength of a power supply signal received by the terminal device.

4. The method of claim 3, wherein determining the first parameter based on at least one of: the power harvesting capability of the terminal device or the strength of the power supply signal received by the terminal device comprises:
determining the first parameter according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

5. The method of claim 3, further comprising:
reporting the power harvesting capability of the terminal device.

6. The method of claim 3 or 5, wherein the power harvesting capability refers to efficiency for the terminal device to harvest power under a power supply signal of preset strength.

7. The method of any one of claims 1 to 6, wherein sending the first indication information comprises:
sending the first indication information periodically.

8. The method of claim 7, wherein a sending period of the first indication information is configured by a network device or predefined.

9. The method of any one of claims 1 to 6, wherein sending the first indication information comprises:
reporting the first indication information in a triggering manner.

10. The method of claim 9, wherein reporting the first indication information in the triggering manner comprises:
triggering, based on at least of the first parameter or strength of a power supply signal received by the terminal device, the terminal device to report the first indication information.

11. The method of claim 10, wherein triggering, based on at least of the first parameter or the strength of the power supply signal received by the terminal device, the terminal device to report the first indication information comprises:
triggering the terminal device to report the first indication information in a case of meeting at least one of:
the first parameter meets a first threshold;
a change of the first parameter meets a second threshold;
the strength of the power supply signal received by the terminal device meets a third threshold; or
a change of the strength of the power supply signal received by the terminal device meets a fourth threshold.

12. The method of claim 11, wherein at least one of the first threshold, the second threshold, the third threshold, or the fourth threshold is configured by a network device or predefined.

13. The method of claim 9, wherein reporting the first indication information in the triggering manner comprises:
receiving second indication information, wherein the second indication information is used for instructing the terminal device to report the first indication information; and
triggering, through the second indication information, the terminal device to report the first indication information.

14. The method of claim 9, wherein reporting the first indication information in the triggering manner comprises:
sending scheduling request information, wherein the scheduling request information is used for requesting a network device to allocate uplink transmission resources for the terminal device; and
triggering, through the scheduling request information, the terminal device to report the first indication information.

15. The method of any one of claims 1 to 14, wherein the first indication information is carried in a back scattering signal.

16. The method of any one of claims 1 to 15, further comprising:
sending third indication information, wherein the third indication information indicates at least one of a power storage state of the terminal device or a communication duration capable of being maintained by the terminal device.

17. The method of claim 16, wherein the power storage state is represented as a value of power that has been harvested by the terminal device.

18. The method of claim 16 or 17, wherein sending the third indication information comprises:
sending the third indication information periodically.

19. The method of claim 18, wherein a sending period of the third indication information is configured by a network device or predefined.

20. The method of claim 16 or 17, wherein sending the third indication information comprises:
reporting the third indication information in a triggering manner.

21. The method of claim 20, wherein reporting the third indication information in the triggering manner comprises:
triggering, based on at least one of the power storage state, the communication duration or strength of a power supply signal received by the terminal device, the terminal device to report the third indication information.

22. The method of claim 21, wherein triggering, based on at least one of the power storage state, the communication duration or the strength of the power supply signal received by the terminal device, the terminal device to report the third indication information comprises:
triggering the terminal device to report the third indication information in a case of meeting at least one of:
the power storage state meets a fifth threshold;
a change of the power storage state meets a sixth threshold;
the communication duration meets a seventh threshold;
a change of the communication duration meets an eighth threshold;
the strength of the power supply signal received by the terminal device meets a ninth threshold; or
a change of the strength of the power supply signal received by the terminal device meets a tenth threshold.

23. The method of claim 22, wherein at least one of the fifth threshold, the sixth threshold, the seventh threshold, the eighth threshold, the ninth threshold, or the tenth threshold is configured by a network device or predefined .

24. The method of claim 20, wherein reporting the third indication information in the triggering manner comprises:
receiving fourth indication information, wherein the fourth indication information is used for instructing the terminal device to report the third indication information; and
triggering, through the fourth indication information, the terminal device to report the third indication information.

25. The method of claim 20, wherein reporting the third indication information in the triggering manner comprises:
sending scheduling request information, wherein the scheduling request information is used for requesting a network device to allocate uplink transmission resources for the terminal device; and
triggering, through the scheduling request information, the terminal device to report the third indication information.

26. A method for wireless communication, comprising:
determining a first parameter, wherein the first parameter is used to represent at least one of first power harvesting efficiency of a terminal device or a first time interval; and
performing, based on the first parameter, data transmission with the terminal device.

27. The method of claim 26, wherein performing, based on the first parameter, the data transmission with the terminal device comprises:
determining, based on the first parameter, at least one of:
a second time interval for scheduling the terminal device to perform back scattering communication;
a period of Discontinuous Reception (DRX);
a period of a semi-persistent scheduling resource; or
a period of an unlicensed resource.

28. The method of claim 27, wherein at least one of the following applies: the second time interval is a time interval between downlink data and feedback information; or the second time interval is a time interval between a trigger signal and a back scattering signal.

29. The method of any one of claims 26 to 28, wherein at least one of the following applies: the first power harvesting efficiency is represented as a power harvesting duration of the terminal device; the first time interval is represented as a duration between ending of a transmission due to insufficient power of the terminal device and restarting of the transmission; or the first time interval is represented as a duration of communication interruption due to insufficient power of the terminal device.

30. The method of any one of claims 26 to 29, wherein determining the first parameter comprises:
determining the first parameter based on at least one of: a power harvesting capability of the terminal device or strength of a power supply signal received by the terminal device.

31. The method of claim 30, wherein determining the first parameter based on at least one of: the power harvesting capability of the terminal device or the strength of the power supply signal received by the terminal device comprises:
determining the first parameter according to at least one of:
determining a time interval determined based on the first power harvesting efficiency as the first parameter;
determining power harvesting efficiency corresponding to the power harvesting capability of the terminal device as the first parameter;
determining power harvesting efficiency corresponding to the strength of the power supply signal received by the terminal device as the first parameter;
determining a time interval corresponding to the power harvesting capability of the terminal device as the first parameter; or
determining a time interval corresponding to the strength of the power supply signal received by the terminal device as the first parameter.

32. The method of claim 31, further comprising:
reporting the power harvesting capability of the terminal device.

33. The method of claim 30 or 32, wherein the power harvesting capability refers to efficiency for the terminal device to harvest power under a power supply signal of preset strength.

34. The method of any one of claims 26 to 29, wherein determining the first parameter comprises:
receiving first indication information,
wherein the first indication information indicates the first parameter.

35. The method of claim 34, wherein receiving the first indication information comprises:
receiving the first indication information periodically.

36. The method of claim 35, wherein a sending period of the first indication information is configured by a network device or predefined.

37. The method of claim 34, further comprising:
sending second indication information, wherein the second indication information is used for instructing the terminal device to report the first indication information.

38. The method of any one of claims 34 to 37, wherein the first indication information is carried in a back scattering signal.

39. The method of any one of claims 26 to 38, further comprising:
receiving third indication information, wherein the third indication information indicates at least one of a power storage state of the terminal device or a communication duration capable of being maintained by the terminal device; and
scheduling the terminal device within a duration corresponding to the power storage state or within the communication duration.

40. The method of claim 39, wherein receiving the third indication information comprises:
receiving the third indication information periodically.

41. The method of claim 40, wherein a sending period of the third indication information is configured by a network device or predefined.

42. The method of claim 39, further comprising:
sending fourth indication information, wherein the fourth indication information is used for instructing the terminal device to report the third indication information.

43. A terminal device, comprising:
a sending unit, configured to send first indication information,
wherein the first indication information indicates a first parameter, and the first parameter is used to represent at least one of first power harvesting efficiency of a terminal device or a first time interval.

44. A network device, comprising:
a determining unit, configured to determine a first parameter, wherein the first parameter is used to represent at least one of first power harvesting efficiency of a terminal device or a first time interval; and
a transmission unit, configured to perform, based on the first parameter, data transmission with the terminal device.

45. A terminal device, comprising:
a processor; and
a memory for storing a computer program,
wherein the processor is configured to invoke and run the computer program stored in the memory to perform the method of any one of claims 1 to 25.

46. A network device, comprising:
a processor; and
a memory for storing a computer program,
wherein the processor is configured to invoke and run the computer program stored in the memory to perform the method of any one of claims 26 to 42.

47. A chip, comprising:
a processor, configured to invoke and run a computer program from a memory to cause a device installed with the chip to perform the method of any one of claims 1 to 25 or the method of any one of claims 26 to 42.

48. A computer-readable storage medium for storing a computer program that causes a computer to perform the method of any one of claims 1 to 25 or the method of any one of claims 26 to 42.

49. A computer program product having stored thereon computer program instructions that cause a computer to perform the method of any one of claims 1 to 25 or the method of any one of claims 26 to 42.

50. A computer program causing a computer to perform the method of any one of claims 1 to 25 or the method of any one of claims 26 to 42.
